# EUROPÄISCHE PATENTSCHRIFT

(11) **EP 1 624 614 B1**
(45) Veröffentlichungstag und Bekanntmachung des Hinweises auf die Patenterteilung: **02.01.2008**
(21) Anmeldenummer: 04018287.5
(22) Anmeldetag: 02.08.2004
(51) Int. Cl.: H04L 12/24

(54) **Automatische Planung von Netzwerkkonfigurationen**
Automatic planning of network configurations
Planification automatique des configurations de réseau

(43) Veröffentlichungstag der Anmeldung: 08.02.2006
(73) Patentinhaber: SIEMENS AKTIENGESELLSCHAFT, 80333 München (DE)
(72) Erfinder: Kröger, Reinhold, Prof., 53560 Vettelschoss (DE); Machens, Holger, 65203 Wiesbaden (DE)

(56) Entgegenhaltungen:
- US-A1- 2003 181 210
- ALTINKEMER K ED - BLANNING R ET AL: "Parallel savings heuristics for designing multi-center tree networks" SYSTEM SCIENCES, 1989. VOL.III: DECISION SUPPORT AND KNOWLEDGE BASED SYSTEMS TRACK, PROCEEDINGS OF THE TWENTY-SECOND ANNUAL HAWAII INTERNATIONAL CONFERENCE ON KAILUA-KONA, HI, USA 3-6 JAN. 1989, WASHINGTON, DC, USA,IEEE COMPUT. SOC. PR, US, 3. Januar 1989 (1989-01-03), Seiten 762-769, XP010015020 ISBN: 0-8186-1913-9
- ISHIWA N ET AL: "AN EXPERT SYSTEM FOR PLANNING PRIVATE NETWORKS" NEC RESEARCH AND DEVELOPMENT, NIPPON ELECTRIC LTD. TOKYO, JP, Bd. 35, Nr. 3, 1. Juli 1994 (1994-07-01), Seiten 306-314, XP000468662 ISSN: 0547-051X

## Beschreibung

Das Engineering insbesondere von automatisierungstechnischen Anlagen ist eine komplexe und zeitintensive Aufgabe. Komplexe Automatisierungsanlagen sind verteilt und basieren häufig auf mehrstufigen Netzwerkarchitekturen wie Feldbussen (z.B. PROFIbus) und übergeordneten Fabriknetzen auf Ethernet-Basis. Die Grenzen zwischen traditionellen Feldbussen und höheren Netzwerken verschwimmen dabei zunehmend (z.B. PROFInet). Während das Engineering von PROFIbus-Strukturen vollständig beherrscht wird, stellt die Konzeption von Ethernet-Netzwerken für große Teilnehmeranzahlen immer noch ein Problem dar, insbesondere wenn Dienstgütekriterien wie Ende-zu-Ende-Verzögerungszeiten und Auslastungsgrenzen einzuhalten sind.

Prinzipiell stellt die Suche nach einer Netzwerkstruktur ein Problem aus der Klasse NP dar. Bei großen Teilnehmerzahlen werden Brute-Force-Ansätze, bei denen es sich um eine Lösungsmethode schwerer Probleme aus dem Bereich der Informatik und der Spieltheorie handelt, die auf dem Ausprobieren aller Varianten beruht, daher schnell unbrauchbar.

Besonderes Interesse besteht daher an allen Werkzeugen, die diesen Prozess in Hinblick auf Fehlerfreiheit und Effizienz unterstützen und vereinfachen. Bislang werden solche Werkzeuge eher isoliert betrachtet und erfordern oft die wiederholte Eingabe bereits bestehender Informationen in mehr oder weniger identischer Form.

Aus Altinkemer, K. et al, 1998, "Parallel savings heuristics für designing multi center tree networks" System Sciences, 1989, Vol. III: Decision Support And Knowledge Based Systems Track, Proceeding Of The Twenty-Second Based Systems Track, Proceedings Of The Twenty-Second Annual Hawaii International Conference On Kailua-Kona, HI, USA 3-6 Jan. 1989, Washington, DC, USA, IEEE Comput. Soc. PR, US, 3. Januar 1989 (1989-01-03), Seiten 762-769, ISBN: 0-8186-1913-9 ist ein System zum Lösen von einem in Teilprobleme unterteilten Problem bekannt.

Die Aufgabe der vorliegenden Erfindung besteht daher darin, eine Vorrichtung sowie ein Verfahren anzugeben, welche den Aufwand bei der Suche nach einer geeigneten Netzwerkkonfiguration, insbesondere im Automatisierungsumfeld, verringern.

Die Aufgabe wird gelöst durch eine Vorrichtung zur automatischen Planung einer Netzwerkkonfiguration, insbesondere für ein Automatisierungssystem, mit mindestens einem Partitionsmodul zum Zerlegen mindestens eines beschriebenen Netzwerk-Planungsproblems in Teilprobleme, mindestens einem Produktionsmodul zur Generierung je mindestens einer Lösung für die Teilprobleme des mindestens einen Netzwerk-Planungsproblems auf Basis vorgebbarer Regeln und mindestens einem Validationsmodul zur Überprüfung der generierten Lösungen für die Teilprobleme.

Die Aufgabe wird weiterhin gelöst durch ein Verfahren zur automatischen Planung einer Netzwerkkonfiguration, insbesondere für ein Automatisierungssystem, bei dem mindestens ein beschriebenes Netzwerk-Planungsproblem mittels Partitions-Verfahren in Teilprobleme zerlegt wird, je mindestens eine Lösung für die Teilprobleme des mindestens einen Netzwerk-Planungsproblems auf Basis vorgebbarer, erweiterbarer Regeln mittels einer heuristischen Suche generiert wird und eine Überprüfung der generierten Lösungen für die Teilprobleme mittels eines Akzeptanztests erfolgt.

Zweck der erfindungsgemäßen Vorrichtung sowie des Verfahrens zur automatischen Netzwerkplanung ist die Unterstützung des Planungsprozesses von Netzwerkstrukturen für große Systeme, insbesondere für Systeme mit mehr als 1000 Teilnehmern, durch die Bereitstellung geeigneter Methoden und Werkzeuge. Einer der Schwerpunkte liegt dabei auf Switch-basierten Ethernet-LANs, wie sie z.B. in PROFInet-Umgebungen Verwendung finden.

In der erfindungsgemäßen Vorrichtung sowie dem Verfahren werden daher aus der künstlichen Intelligenz stammende Methoden eingesetzt, um die Suche nach einer akzeptablen Lösung geeignet zu steuern.

Mittels der beschriebenen Vorrichtung sowie dem Verfahren wird in beschränkter Rechenzeit eine Konfiguration generiert, die alle Geräte zu einem funktionsfähigen Netzwerk verbindet, bestehende Konstruktionsregeln berücksichtigt, die gestellten Dienstgütekriterien und Auslastungsgrenzen einhält und möglichst preiswert zu realisieren ist.

Im Folgenden wird die Erfindung anhand der in den Figuren dargestellten Ausführungsbeispiele näher beschrieben und erläutert.

Es zeigen:
- FIG 1: eine schematische Darstellung der Vorrichtung zur automatischen Planung von Netzwerkkonfigurationen,
- FIG 2: eine schematische Darstellung der Zerlegung in Teilprobleme,
- FIG 3: eine schematische Darstellung der Wirkungsweise von Produktionsregeln,
- FIG 4: eine schematische Darstellung der Schritte bei der Lösungssuche,
- FIG 5: ein Beispiel für eine heuristische Suche im Suchbaum,
- FIG 6: eine schematische Darstellung des Backtracking-Verfahrens.

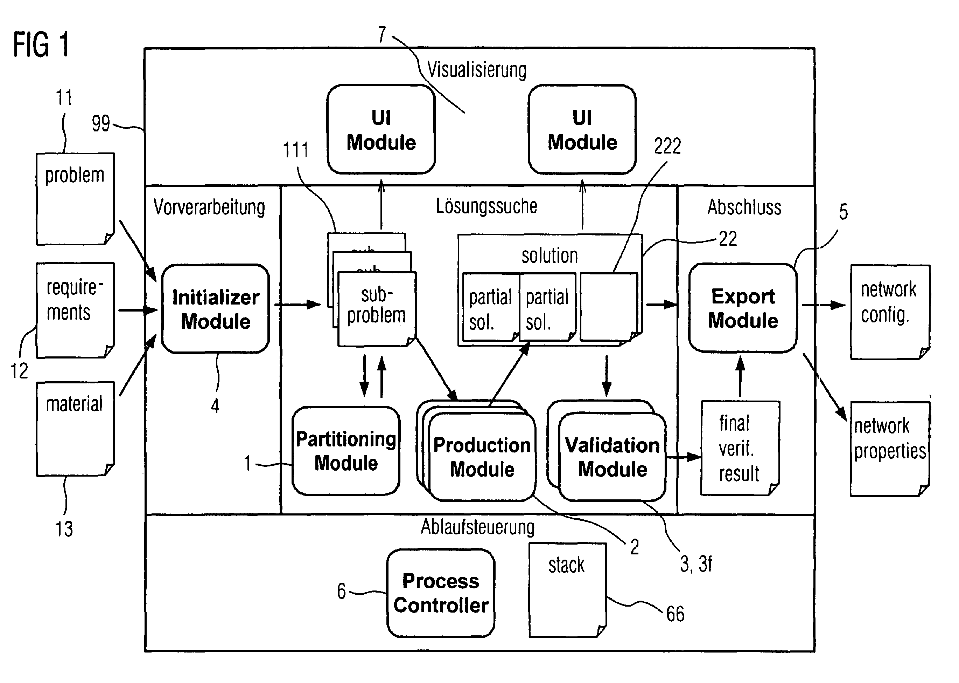

In FIG 1 ist die Vorrichtung zur automatischen Planung von Netzwerkkonfigurationen schematisch dargestellt. Der Algorithmus zur Generierung des Netzwerks wird eingebettet in ein Framework 99, das eine Reihe von Diensten, Datenstrukturen und Schnittstellen als Teile einer Netzwerk-Design-Infrastruktur bereitstellt.

Das Framework 99 beinhaltet ein oder mehrere Partitionsmodule 1, die jeweils eine Zerlegung eines Netzwerk-Planungsproblems 11 in Teilprobleme 111 vornehmen. Weiterhin existiert ein Beschreibungsmodell für ein Netzwerk-Planungsproblem 11 sowie ein Initialisierungsmodul 4 zum Einlesen der Eingabedaten für ein Netzwerk-Planungsproblem 11. Ein oder mehrere Produktionsmodule 2 generieren anschließend nach bestimmten Regeln Teillösungen 222 zu den Netzwerkplänungs-Problemen 11. Ein oder mehrere Validationsmodule 3,3f überprüfen die generierten Teillösungen 222 und führen zum Abschluss einen finalen Akzeptanztest für die Gesamtlösung 22 durch.

Die Vorrichtung verfügt weiterhin über eine Ablaufsteuerung 6 (Process Controller) für den Lösungsprozess, ein Exportmodul 5 zur Ausgabe der Lösungen 22, 222 und der Validationsergebnisse der Validationsmodule 3, 3f und eine grafische Benutzerschnittstelle 7 zur Visualisierung des Lösungsprozesses und der Lösung.

Der Generierungsprozess der Netzwerkkonfiguration wird von der Ablaufsteuerung 6 (Process Controller) gesteuert, der die einzelnen Schritte des Prozesses überwacht und die Erfüllung der jeweiligen Teilaufgaben in den verschiedenen Phasen (Vorbereitungsphase, Lösungssuche, Abschlussphase) an die zuständigen Module 1, 2, 3, 4, 5 delegiert. Die Ablaufsteuerung 6 verfolgt dabei einen Algorithmus, dessen architekturelle Merkmale sich wie folgt beschreiben lassen:
- Einlesen eines in die Graphentheorie transformierten Netzwerk-Planungsproblems 11 durch das Initialisierungsmodul 4
- Problemzerlegung durch Partitions-Verfahren mittels eines oder mehrerer Partitionsmodule 1
- Repräsentierung des Expertenwissens durch erweiterbare Produktionsregelmengen, sowie heuristische Suche in einem Suchbaum mit Bewertung von Teillösungen 222 durch die Produktionsmodule 2
- Backtracking auf der Basis einer Stack-Verarbeitung 66 von inkrementellen Teillösungen 222, gesteuert durch die Ablaufsteuerung 6
- Akzeptanztest durch Simulation der durch Komponentenkommunikation induzierten Netzwerklasten in den Validationsmodulen 3, 3f
- Ausgabe der erzeugten Netzwerkstruktur und der ermittelten Validationsergebnisse durch das Exportmodul

Ausgangspunkt für den Planungsprozess bilden die Geometriedaten der zu vernetzenden Automatisierungsgeräte innerhalb der Anlage und eine Materialliste mit den verwendbaren aktiven Netzwerkkomponenten (wie Switches und Repeater), Kabeln und so weiter. Zur Beschreibung des zu lösenden Problems 11 existiert ein Modell, das folgende Elemente enthält:
- Knoten: Identität, Position und Bereichszugehörigkeit der Kommunikationsendpunkte von Automatisierungsgeräten
- Kommunikationsbeziehungen: Beschreibung des Kommunikationsaufkommens zwischen den Kommunikationsendpunkten aus der logischen Verschaltung und der Bindung von Softwarekomponenten zu Automatisierungsgeräten

Die Bereichsinformationen beziehen sich auf Bereiche, die vom Entwickler der Automatisierungsanlage vorgesehen werden. Dazu gehören beispielsweise:
- Sicherheitsbereiche: Nothalt deaktiviert alle beteiligten Komponenten, die in diesem Bereich liegen
- Betriebsartenbereiche: In dem Bereich kann zwischen verschiedenen Betriebsarten (z.B. Automatik und Handbetrieb) gewechselt werden
- HMI-Bereiche: Alle Automatisierungsgeräte eines Bereichs können an einem Human/Machine-Interface bedient werden
- Inbetriebnahmebereiche: Die in einem Bereich befindlichen Komponenten werden bei Bedarf gemeinsam in Betrieb genommen

Solche Bereiche werden in der graphenbezogenen Problembeschreibung als Attribute der Knoten repräsentiert. Die Behandlung von bereichsspezifischen Anforderungen ist Aufgabe der Produktionsmodule 2, die in der Suchphase zum Einsatz kommen.
Neben der Problembeschreibung werden die Anforderungen 12 des Netzwerk-Administrators und eine Materialliste 13 in das System eingespeist. Die Anforderungen 12 beinhalten die verschiedenen QoS-Anforderungen (QoS = Quality of Service: hier zulässige Ende-zu-Ende-Verzögerungszeiten) und eine Priorisierung unter Berücksichtigung der anfallenden Kosten. Die Materialliste 13 enthält die zur Verfügung stehenden Typen von Netzwerkkomponenten wie Switches, Hubs, Repeater sowie Kabel und ähnlichem Material.

Das im Beschreibungsmodell vorliegende Netzwerk-Planungsproblem 11, Anforderungen 12 und Materialliste 13 werden in der Vorbereitungsphase zunächst von dem Initialisierungsmodul 4 in die internen Datenstrukturen eingelesen, bevor das Problem dem Lösungsprozess zugeführt wird.

Das vorliegende Netzwerk-Planungsproblem 11 gehört zu der Klasse der NP-vollständigen Probleme. Die aus der Literatur bekannten Algorithmen weisen alle die Eigenschaft auf, dass die Laufzeit mit steigender Anzahl Knoten und Verbindungen exponentiell zunimmt. Eine der wichtigsten Voraussetzungen, um in zumutbarer Zeit eine Lösung zu dem Problem zu finden, ist daher die Reduzierung der Komplexität. Eine Zerlegung des Problems 11 in eine Reihe von Teilproblemen 111 führt automatisch zu einer Reduzierung der Komplexität und somit zu einer Verbesserung der Laufzeit.

Durch die Zerteilung wird die Gesamtknotenmenge in Teilmengen zerlegt, wodurch Knoten zu autonomen Gruppen zusammengefasst werden, die jeweils ein Teilproblem darstellen. Nach der Lösung des Teilproblems wird die Gruppe durch einen oder mehrere neue Knoten ersetzt, die dann Stellvertreter für alle in der Gruppe befindlichen Kommunikationsendpunkte sind.

Da bereits die Zerlegung des Problems die Lösung beeinflusst, fließen hier die verschiedenen Anforderungen ein. Grundsätzlich kann die Zerlegung oder Gruppenbildung anhand von mehreren unterschiedlichen Kriterien erfolgen:
- Ports der Kopplungselemente: Z.B. Anzahl der mit einem Switch zusammenfassbaren Knoten begrenzt durch Portanzahl.
- Intensität der Kommunikationsbeziehung oder Strenge der QoS-Anforderungen: Je mehr Switches zwischen zwei Knoten liegen, um so höher wird die Ende-zu-Ende-Verzögerung
- Entfernung der Knoten zueinander: Je weiter Knoten vom einem Switch entfernt sind, desto länger müssen z.B. die Kabel sein und desto so höher sind die Kosten
- Bereichsspezifische Bedingungen: Ein Switch innerhalb eines Sicherheitsbereichs (s.o.) darf keine Nachrichten vermitteln, die nicht mit der Kommunikation der im Bereich befindlichen Komponenten in direktem Zusammenhang stehen

Da das Partitions-Verfahren je nach Wahl der Kriterien unterschiedlich sein kann, wird eine Menge von Partitionsmodulen 1 vorgesehen, die erweiterbar und austauschbar ist. Zusätzlich zur initialen Problemzerlegung wird eine dynamische Zerlegung eines Teilproblems 111 in weitere Teilprobleme unterstützt, wenn für das Teilproblem 111 keine Lösung durch ein Produktionsmodul 2 erfolgen konnte. Insgesamt führt der Problemzerlegungsprozess zu einem Baum von Teilproblemen, die jeweils aus einer Menge von Knoten des ursprünglich gegebenen Problems oder aus Repräsentanten unterlagerter Teilprobleme bestehen.

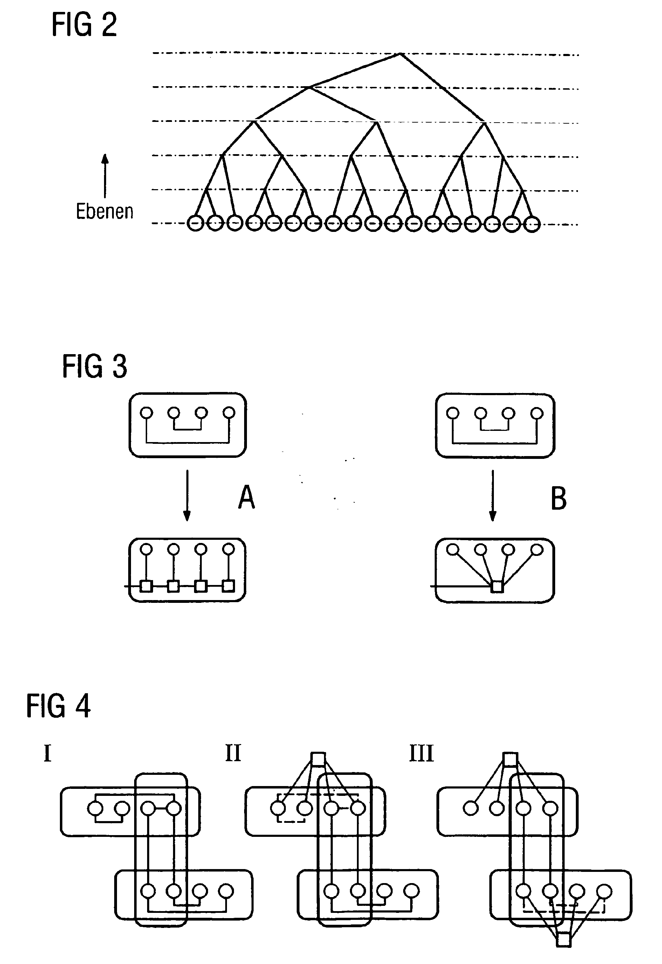

Als Beispiel ist in FIG 2 das Ergebnis einer Zerlegung in Zweiergruppen zu sehen. Der durch die Zerlegung erhaltene Baum mit Teilproblemen 111 wird durch die Ablaufsteuerung teilweise sequenzialisiert, so dass beginnend auf der untersten Ebene des Baumes die Teilprobleme 111 nach und nach den Produktionsmodulen 2 zur Generierung einer Teillösung 111 zugeführt werden. Da die Teilprobleme 111 bis zu einem gewissen Grad von einander unabhängig sind, kann die Lösungssuche für die Teilprobleme 111 parallel erfolgen. Bestehende Abhängigkeiten zwischen den Teilproblem 111 werden durch Vorrangrelationen festgelegt, anhand derer die Ablaufsteuerung 6 (Process Controller) einerseits die Sequenzialisierung vornimmt und andererseits eine Synchronisation bei paralleler Verarbeitung erzwingt, bis alle erforderlichen Eingaben für ein Teilproblem vorliegen.

Zu definierten Problemmustern werden mit den Produktionsmodulen 2 feste Produktionsregeln, also passende Lösungsmuster, ins System integriert, unter denen sich auch Realisierungen von in der Literatur beschriebenen Algorithmen für Teilprobleme 111 befinden. Die Menge der passenden Produktionsregeln auf ein gegebenes (Teil-) Problem 11,111 wird anhand eines Mustervergleichs ausgewählt. Die Produktionsregel wird dazu mit einem Muster ausgestattet, das jene Probleme selektiert, auf die die Produktionsregel anwendbar ist. Das Muster kann dabei sowohl Informationen über Anzahl und Position beteiligter Knoten als auch ID oder Typ der betroffenen Bereiche enthalten.

In FIG 3 ist die Wirkungsweise von zwei Produktionsregeln A, B dargestellt. Sind mehrere Produktionsregeln A, B auf ein Problemmuster anwendbar, so lässt sich durch eine zuvor vergebene Priorisierung die Wahl der Regel steuern.

Der Satz von Produktionsmodulen ist veränderbar, was die Anpassung des Systems an verschiedenste Benutzeranforderungen ermöglicht. Wird z.B., wie im Falle der meisten PROFInet-Umgebungen, eine Linientopologie für das Ethernet-Netzwerk bevorzugt, kann ein entsprechender Satz von Produktionsregeln zusammengestellt werden. Weiterhin lassen sich die Produktionsregelmengen in einzelne Phasen unterteilen, in denen jeweils spezifische Aufgaben zu erfüllen sind, wie z.B. Platzieren von Switches, Hubs o.ä. in einer ersten Phase und Verlegen von Kabeln in einer zweiten Phase. Eine Menge von zusammengehörigen Regeln stellt das domänenspezifische Expertenwissen dar.

Während der Lösungssuche, für die drei beispielhafte Schritte I, II, III in FIG 4 dargestellt sind, werden die bei der Zerlegung identifizierten Teilprobleme 111 den Produktionsmodulen zur Anwendung der Produktionsregeln zugeführt. Dadurch wird eine Teillösung 222, also ein Teil der gesuchten Netzwerkkonfiguration, generiert. Das generierte Teilnetzwerk kann in der Folge als geschlossene Gruppe betrachtet werden, wie es bereits im Abschnitt zu den Partitionsmodulen erläutert wurde.

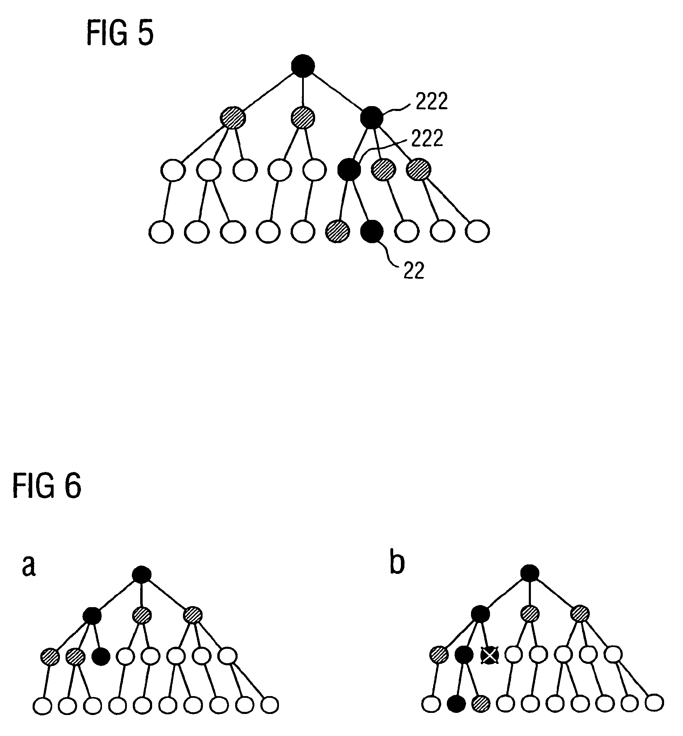

Da auf ein Problem 11 mehrere Produktionsregeln anwendbar sind und eine Produktionsregel potentiell auch mehrere verschiedene Lösungen generieren kann, ist der Prozess der Lösungssuche in einem Suchbaum strukturiert, wie in FIG 5 dargestellt. Im Suchbaum stellt jeder Knoten die Umwandlung eines Teilproblems 111 in eine Teillösung 222 dar. Am unteren Ende jedes Weges durch den Suchbaum steht eine Gesamt- bzw. Komplettlösung 22, die aber nicht immer eine Ideallösung darstellt.

Die Bestimmung des richtigen Weges durch den Suchbaum erfolgt durch die Anwendung von Heuristiken, also Abschätzungen über den zu erwartenden Gewinn einer bestimmten Lösung im jeweils vorliegenden Schritt im Suchbaum. In FIG 5 ist eine solche heuristische Suche grafisch dargestellt. Ausgehend von dem ersten Knoten auf oberster Ebene versucht der Algorithmus zunächst anhand von Bewertungsfunktionen, den Gewinn der drei jeweils folgenden Teillösungen 222 (oder auch Folgezustände) abzuschätzen und entscheidet sich dann für den Weg auf der rechten Seite. Im folgenden Knoten existieren wieder drei mögliche Lösungen 222, diesmal nimmt der Algorithmus den linken Weg, und so weiter.

Größen, die für die Bewertung einer Lösung 22, 222 in Frage kommen, sind beispielsweise die entstehenden Kosten, die zu erwartende Netzauslastung oder der erreichte Fortschritt gemessen als Anzahl der durch die Lösung vernetzten Knoten. Die Bewertung erfolgt auf zwei Ebenen:
- In dem Produktionsmodul 2 selbst durch die Bewertung der nach seinen Produktionsregeln möglichen Lösungen 22, 222
- Durch die Ablaufsteuerung 6 über alle Produktionsmodule 2 durch die Auswertung der von den Produktionsmodulen 2 erhältlichen Bewertung

Nach der Generierung von Teillösungen 222 wird eine grobe Leistungsbewertung mit Hilfe eines Validationsmoduls 3 durchgeführt. Hierfür wird typischerweise ein analytisches Werkzeug verwendet, das schnell ein grobe Abschätzung liefern kann.

Wird bei der Überprüfung einer Teillösung 222 die Verletzung einer gestellten Anforderung bezüglich QoS oder Kosten des Netzwerks erkannt, erfolgt ein so genanntes Backtracking. Hierbei wird der jeweils letzte Zustand im Suchbaum von der Ablaufsteuerung 6 wieder hergestellt und statt des zuletzt gewählten Zustands einer der verbleibenden Folgezustände eingeschlagen.

In FIG 6 ist dieser Vorgang grafisch dargestellt. In Schritt a gelangt der Algorithmus an einen Zustand, der eine oder mehrere Anforderungen nicht erfüllt, der also mit anderen Worten keine Folgezustände zulässt. In Schritt b hat der Algorithmus daher das Backtracking durchgeführt und einen anderen Folgezustand des zuvor besuchten Zustands gewählt und ist dadurch zu einem erfolgreichen Abschluss gelangt.

Für das Backtracking, also die Wiederherstellung eines bereits bearbeiteten Zustands im Suchbaum, wird ein Stack 66 eingesetzt, in dem alle auf dem Weg zu dem aktuellen Zustand liegenden Zustände abgespeichert sind. Das Speichern des gesamten Zustandsraumes würde hingegen schnell die Kapazitäten des verfügbaren Speichers erschöpfen. Da der Zustandsraum mitunter sehr tief sein kann, wird von der Ablaufsteuerung 6 (Process Controller) ein spezieller Stack 66 für große Stacktiefen verwendet.

Zu den Zustandsinformationen, die auf dem Stack 66 abzulegen sind, gehören einerseits alle Informationen, um eine erfolgte Veränderung im Netzwerk rückgängig zu machen, und andererseits die Informationen zur Wahl eines neuen Folgezustandes. Dazu gehören ferner die Reihenfolge der bereits selektierten Produktionsregeln A, B, das Produktionsmodul 2, welches den letzten Zustand erzeugte, und spezifische Informationen, anhand derer das Produktionsmodul 2 den jeweils nächsten zu erzeugenden Folgezustand erkennt.

Für die Prüfung der Teilprobleme 111 können mehrere Validationsmodule 3 eingesetzt werden, die jeweils unterschiedliche Teilaspekte der Anforderungen prüfen. Zum Abschluss der Suche wird an der erhaltenen Netzwerkkonfiguration ein Akzeptanztest mit Hilfe eines Simulators durchgeführt. Auch die finale Prüfung der Gesamtlösung erfolgt durch ein Validationsmodul 3. Die hierfür vorgesehenen Validationsmodule 3f sind durch ein entsprechendes Attribut "final" zur Selektion gekennzeichnet, da sie eine weitaus höhere Genauigkeit erreichen, als die während der Suche durchgeführten groben Leistungsbewertungen und damit mehr Rechenleistung erfordern.

Im Normalfall sollte dieser Schritt nur exaktere Leistungswerte zu dem generierten Netzwerk liefern, kann jedoch aufgrund der höheren Genauigkeit auch erneut Verstöße gegen die Anforderungen aufdecken. Auch hier wird zunächst ein Backtracking durchgeführt und auf eine Besserung gehofft. Wird jedoch keine geeignete Lösung gefunden, werden die kritischen Abschnitte in dem Netzwerk markiert und es wird dem Benutzer die Möglichkeit zur Nachbesserung gegeben.

Die Nachbesserung durch den Benutzer kann entweder händisch erfolgen oder in einer Rückführung des Problems in das System bestehen. Hierzu können kritische Abschnitte zur Bearbeitung ausgewählt werden, Teillösungen vorgegeben werden, die vom System direkt in die Lösung übernommen werden, oder es kann die unveränderte, ursprüngliche Problembeschreibung 11 unter neuen Parametern, also neu definierten Anforderungen, in das System eingespeist werden.

## Patentansprüche

1. Vorrichtung zur automatischen Planung einer Netzwerkkonfiguration, insbesondere für ein Automatisierungssystem, mit
• mindestens einem Partitionsmodul (1) zum Zerlegen mindestens eines beschriebenen Netzwerk-Planungsproblems (11) in Teilprobleme (111), wobei das Netzwerk-Planungsproblem durch ein Modell bestehend aus Knoten und Kommunikationsbeziehungen beschrieben wird und wobei durch die Zerlegung Knoten zu autonomen Gruppen zusammengefasst werden, die jeweils ein Teilproblem darstellen,
• mindestens einem Produktionsmodul (2) zur Generierung je mindestens einer Lösung (222) für die Teilprobleme (111) des mindestens einen Netzwerk-Planungsproblems (11) auf Basis vorgebbarer, auf Attribute der Knoten anwendbarer Regeln, wobei die Attribute Bereiche in der grafenbezogenen Problembeschreibung des Automatisierungssystems repräsentieren und
• mindestens einem Validationsmodul (3) zur Überprüfung der generierten Lösungen (222) für die Teilprobleme (111).

2. Vorrichtung nach Anspruch 1, mit mindestens einem Initialisierungsmodul (4) zum Einlesen des mindestens einen Netzwerk-Planungsproblems (11) in Form von Eingabedaten.

3. Vorrichtung nach Anspruch 2, wobei das mindestens eine Netzwerk-Planungsproblem (11) in Form eines Modells einlesbar ist.

4. Vorrichtung nach Anspruch 1, wobei mindestens ein weiteres Validationsmodul (3f) zur Durchführung eines finalen Akzeptanztests von Gesamtlösungen (22) mittels eines Simulators vorgesehen ist.

5. Vorrichtung nach einem der vorhergehenden Ansprüche, mit einem Exportmodul (5) zur Ausgabe erzeugter Gesamtlösungen (22) und/oder zur Ausgabe der Ergebnisse der Überprüfungen durch die Validationsmodule (3, 3f).

6. Vorrichtung nach einem der vorhergehenden Ansprüche, mit einer Ablaufsteuerung (6) zur Überwachung einzelner Schritte des Planungsprozesses und/oder zur Delegation von Teilaufgaben an die jeweils zuständigen Module (1, 2, 3, 4, 5).

7. Vorrichtung nach einem der vorhergehenden Ansprüche, mit einem Stack (66) zur Speicherung bereits erzeugter Teillösungen (222) für ein Netzwerk-Planungsproblem, wobei die Speicherung in Form von aufeinander folgenden Zuständen erfolgt.

8. Vorrichtung nach einem der vorhergehenden Ansprüche, mit mindestens einer grafischen Benutzerschnittstelle (7) zur Visualisierung des Lösungsprozesses und/oder von Lösungen (22, 222).

9. Verfahren zur automatischen Planung einer Netzwerkkonfiguration, insbesondere für ein Automatisierungssystem, bei dem
• mindestens ein beschriebenes Netzwerk-Planungsproblem (11) mittels Partitions-Verfahren in Teilprobleme (111) zerlegt wird, wobei das Netzwerk-Planungsproblem durch ein Modell bestehend aus Knoten und Kommunikationsbeziehungen beschrieben wird und wobei durch die Zerlegung Knoten zu autonomen Gruppen zusammengefasst werden, die jeweils ein Teilproblem darstellen,
• je mindestens eine Lösung (222) für die Teilprobleme (111) des mindestens einen Netzwerk-Planungsproblems (11) auf Basis vorgebbarer, erweiterbarer, auf Attribute der Knoten anwendbarer Regeln mittels einer heuristischen Suche generiert wird, wobei die Attribute Bereiche in der grafenbezogenen Problembeschreibung des Automatisierungssystems repräsentieren und
• eine Überprüfung der generierten Lösungen (222) für die Teilprobleme (111) mittels eines Akzeptanztests erfolgt.

10. Verfahren nach Anspruch 9, bei dem mindestens ein in die Graphentheorie transformiertes Netzwerk-Planungsproblem (11) in Form von Eingabedaten eingelesen wird.

11. Verfahren nach Anspruch 10, bei dem das mindestens eine Netzwerk-Planungsproblem (11) in Form eines Modells eingelesen wird.

12. Verfahren nach Anspruch 9, bei dem mindestens ein finaler Akzeptanztest von Gesamtlösungen (22) mittels Simulation erfolgt.

13. Verfahren nach einem der Ansprüche 9 bis 12, bei dem erzeugte Gesamtlösungen (22) und/oder die Ergebnisse der mittels Akzeptanztests durchgeführten Überprüfungen über Exportmodul (5) ein ausgegeben werden

14. Verfahren nach einem der Ansprüche 9 bis 13,bei dem einzelne Schritte des Planungsprozesses durch eine Ablaufsteuerung überwacht werden und/oder Teilaufgaben an die jeweils zuständigen Module (1, 2, 3, 4, 5) durch die Ablaufsteuerung delegiert werden.

15. Verfahren nach einem der Ansprüche 9 bis 14, bei dem bereits erzeugte Teillösungen (222) für ein Netzwerk-Planungsproblem auf einem Stack (66) in Form von aufeinander folgenden Zuständen gespeichert werden.

16. Verfahren nach einem der Ansprüche 9 bis 15, bei dem der Lösungsprozesses und/oder die Lösungen (22, 222) über mindestens eine grafischen Benutzerschnittstelle (7) visualisiert werden.

## Claims

1. Device for the automatic planning of a network configuration, in particular for an automation system, with
• at least one partition module (1) to break down at least one described network planning problem (11) into sub-problems (111), with the network planning problem being described by a model consisting of nodes and communication relationships and with nodes being combined to form autonomous groups as a result of the break down, said groups each representing a subproblem,
• at least one production module (2) to generate at least one solution (222) to each of the sub-problems (111) of the at least one network planning problem (11) based on predefinable rules which can be applied to node attributes, with the attributes representing regions in the graph-based problem description of the automation system and
• at least one validation module (3) to verify the generated solutions (222) to the sub-problems (111).

2. Device according to claim 1, with at least one initialisation module (4) to read in the at least one network planning problem (11) in the form of input data.

3. Device according to claim 2, with the option of reading in the at least one network planning problem (11) in the form of a model.

4. Device according to claim 1, with at least one further validation module (3f) being provided to carry out a final acceptance test on overall solutions (22) using a simulator.

5. Device according to one of the preceding claims, with an export module (5) to output generated overall solutions (22) and/or to output the results of the verifications by the validation modules (3, 3f).

6. Device according to one of the preceding claims, with a process controller (6) to monitor individual steps of the planning process and/or to delegate sub-tasks to the respectively competent modules (1, 2, 3, 4, 5).

7. Device according to one of the preceding claims, with a stack (66) to store already generated partial solutions (222) to a network planning problem, storage taking place in the form of successive states.

8. Device according to one of the preceding claims, with at least one graphical user interface (7) to display the solution process and/or solutions (22, 222) visually.

9. Method for the automatic planning of a network configuration, in particular for an automation system, in which
• at least one described network planning problem (11) is broken down into sub-problems (111) by means of partition methods, with the network planning problem being described by a model consisting of nodes and communication relationships and with nodes being combined to form autonomous groups as a result of the break down, said groups each representing a subproblem,
• at least one solution (222) for each of the sub-problems (111) of the at least one network planning problem (11) is generated based on predefinable, extendable rules which can be applied to node attributes, by means of a heuristic search, with the attributes representing regions in the graph-based problem description of the automation solution and
• the generated solutions (222) to the sub-problems (111) are verified by means of an acceptance test.

10. Method according to claim 9, in which at least one network planning problem (11) converted to graph theory is read in in the form of input data.

11. Method according to claim 10, in which the at least one network planning problem (11) is read in in the form of a model.

12. Method according to claim 9, in which at least one final acceptance test is carried out on the overall solutions (22) by means of simulation.

13. Method according to one of claims 9 to 12, in which generated overall solutions (22) and/or the results of the verifications carried out by means of acceptance tests is/are output via the export module (5).

14. Method according to one of claims 9 to 13, in which individual steps of the planning process are monitored by a process controller and/or sub-tasks are delegated to the respectively competent modules (1, 2, 3, 4, 5) by the process controller.

15. Method according to one of claims 9 to 14, in which already generated partial solutions (222) to a network planning problem are stored on a stack (66) in the form of successive states.

16. Method according to one of claims 9 to 15, in which the solution process and/or the solutions (22, 222) are displayed visually via at least one graphical user interface (7).

## Revendications

1. Dispositif destiné à la planification automatique d'une configuration de réseau, notamment pour un système d'automatisation, comprenant
• au moins un module de partitionnement (1) pour décomposer au moins un problème décrit de planification de réseau (11) en problèmes partiels (111), le problème de planification de réseau étant décrit au moyen d'un modèle constitué de noeuds et de relations de communication, et, au moyen de la décomposition, des noeuds étant regroupés en groupes autonomes, qui représentent respectivement un problème partiel,
• au moins un module de production (2) pour générer respectivement au moins une solution (222) aux problèmes partiels (111) de l'au moins un problème de planification de réseau (11) sur la base de règles prédéfinissables et applicables à des attributs des noeuds, les attributs représentant des domaines dans la description de problème, relative à un graphe, du système d'automatisation et
• au moins un module de validation (3) pour vérifier les solutions générées (222) pour les problèmes partiels (111).

2. Dispositif selon la revendication 1, comprenant au moins un module d'initialisation (4) pour lire l'au moins un problème de planification de réseau (11) sous forme de données d'entrée.

3. Dispositif selon la revendication 2, l'au moins un problème de planification de réseau (11) étant lisible sous forme d'un modèle.

4. Dispositif selon la revendication 1, au moins un module de validation supplémentaire (3f) étant prévu pour réaliser un test d'acceptation final de solutions globales (22) au moyen d'un simulateur.

5. Dispositif selon l'une quelconque des revendications précédentes, comprenant un module d'exportation (5) pour sortir des solutions globales générées (22) et/ou pour sortir les résultats des vérifications au moyen des modules de validation (3, 3f).

6. Dispositif selon l'une quelconque des revendications précédentes, comprenant une commande de processus (6) pour contrôler les étapes individuelles du processus de planification et/ou pour déléguer des tâches partielles au modules respectivement responsables (1, 2, 3, 4, 5).

7. Dispositif selon l'une quelconque des revendications précédentes, comprenant une pile (66) pour la mémorisation de solutions partielles (222) déjà générées pour un problème de planification de réseau, la mémorisation étant réalisée sous forme d'états se succédant les uns aux autres.

8. Dispositif selon l'une quelconque des revendications précédentes, comprenant au moins une interface utilisateur graphique (7) pour visualiser le processus de résolution et/ou des solutions (22, 222).

9. Procédé destiné à la planification automatique d'une configuration de réseau, notamment pour un système d'automatisation, dans lequel
• au moins un problème décrit de planification de réseau (11) est décomposé en problèmes partiels (111) au moyen d'un procédé de partitionnement, le problème de planification de réseau étant décrit au moyen d'un modèle constitué de noeuds et de relations de communication, et, au moyen de la décomposition, des noeuds étant regroupés en groupes autonomes, qui représentent respectivement un problème partiel,
• au moins respectivement une solution (222) est générée pour les problèmes partiels (111) de l'au moins un problème de planification de réseau (11) au moyen d'une recherche heuristique sur la base de règles prédéfinissables, extensibles et applicables à des attributs des noeuds, les attributs représentant des domaines dans la description de problème, relative à un graphe, du système d'automatisation et
• une vérification des solutions générées (222) est réalisée pour les problèmes partiels (111) au moyen d'un test d'acceptation.

10. Procédé selon la revendication 9, dans lequel au moins un problème de planification de réseau (11) transformé dans la théorie des graphes est lu sous forme de données d'entrée.

11. Procédé selon la revendication 10, dans lequel au moins un problème de planification de réseau (11) est lu sous forme d'un modèle.

12. Procédé selon la revendication 9, dans lequel au moins un test d'acceptation final de solutions globales (22) est réalisé au moyen d'une simulation.

13. Procédé selon l'une quelconque des revendications 9 à 12, dans lequel des solutions globales générées (22) et/ou les résultats des vérifications exécutées au moyen du test d'acceptation sont sortis par l'intermédiaire du module d'exportation (5).

14. Procédé selon l'une quelconque des revendications 9 à 13, dans lequel les étapes individuelles du processus de planification sont contrôlées par une commande de processus et/ou dans lequel des tâches partielles sont déléguées aux modules respectivement responsables (1, 2, 3, 4, 5) par la commande de processus.

15. Procédé selon l'une quelconque des revendications 9 à 14, dans lequel les solutions partielles (222) déjà générées sont mémorisées sur une pile (66) pour un problème de planification de réseau, sous forme d'états se succédant les uns aux autres.

16. Procédé selon l'une quelconque des revendications 9 à 15, dans lequel le processus de résolution et/ou les solutions (22, 222) sont visualisées par l'intermédiaire d'au moins une interface utilisateur graphique (7).
